# EUROPEAN PATENT APPLICATION

(11) **EP 4 785 833 A1**
(43) Date of publication of application: **05.08.2026**
(21) Application number: 26150644.8
(22) Date of filing: 07.01.2026
(51) Int. Cl.: A47J 31/30, A47J 27/00

(54) **BOILER FOR AN INDUCTION COFFEE-MAKER AND RELATED METHOD OF MANUFACTURE**

(30) Priority: 31.01.2025 IT 202500001785
(71) Applicant: Pezzetti Caffettiere S.r.l., 25064 Gussago (BS) (IT); Zhejiang Trendy Kitchenware Co., Ltd, Quzhou, Zhejiang 324200 (CN)
(72) Inventor: ANDINA, Diego, 25064 Gussago, Brescia (IT); HU, Liansheng, Quzhou, Zhejiang, 324200 (CN)
(74) Representative: Gualeni, Nadia

(57) **Abstract**

A boiler (3) for an induction coffee-maker according to the present invention comprises an enbloc body made of aluminium with a side wall (30) connected at the bottom to a bottom (31) and at the top to coupling means (32) for a coffee-maker collector. The boiler (3) is provided with a bottom plate (33) rigidly coupled below the bottom (31); the bottom plate (33) is formed by an inner layer (311) of aluminium and an outer layer (312) of ferromagnetic material; the bottom plate (33) has a discoid base (320) and an annular flank (321) which together define a seat (322) in which the bottom (31) of the boiler (3) is inserted. Advantageously, the bottom plate (33) is secured to the bottom (31) of the boiler (3) by means of adhesion and shape anchoring.

## Description

The subject matter of the present invention is a coffee-maker for the preparation of hot beverages, in particular for the preparation of infusions obtained from coffee powder or barley or the like.

The subject matter of the present invention is also the method for the making of such a coffee-maker.

Herein and hereinafter, the term "coffee-maker" or "moka" is intended to mean any apparatus for the preparation of hot beverages, in particular for the preparation of coffee, cappuccino, latte or other infusions obtained from coffee powder or barley or the like. The coffee-maker comprises, as known, a lower part, called boiler or also kettle, and an upper part, called jug or also collector, coupled to one another generally by screwing.

In the making of coffee-makers, the use of aluminium and its alloys is particularly appreciated. These alloys, in fact, alongside an excellent behavior from the point of view of the preparation of the beverage, allow a relative ease of casting and of machining during the production of the components of the coffee-maker.

Currently, so-called induction hobs or cooktops are increasingly widespread also in the domestic environment. In order for induction heating to be effective, it is necessary for the coffee-maker, and in particular the boiler which in use is in direct contact with the hob, to comprise at least one portion made of ferromagnetic material; stainless steel is typically used for this purpose.

To achieve a good compromise between the ferromagnetic properties and those of optimal and uniform heat distribution, aluminium coffee-makers are known in which, at the bottom of the boiler, a disc of stainless steel is secured. An example of such known coffee-makers is described in document WO2008012838. One of the problems associated with the making of the known coffee-makers is the correct securing of the ferromagnetic material to the bottom of the aluminium boiler: not only must the two materials be constrained in a stable manner, but it is also important that the lower surface of the boiler, although provided with ferromagnetic material, is smooth and uniform. Further examples of induction coffee-makers with a boiler made of aluminium provided with a bottom plate of ferromagnetic material are shown in documents WO 2010/105386 A1 and ES 2 263 385 A1.

An object of the present invention is to develop a coffee-maker, and in particular a boiler for a coffee-maker, suitable for use on induction hobs of any type, which makes it possible to overcome at least partially the drawbacks complained of above with reference to the known art.

A further object of the present invention is to develop a coffee-maker, and in particular a boiler for a coffee-maker, suitable for use on induction hobs of any type, which preserves unaltered the flavor obtained with traditional preparation in an aluminium container.

Said object and said purposes are achieved by means of a boiler for a coffee-maker according to claim 1, by a coffee-maker according to claim 9, as well as by the related method of manufacture according to claim 10.

Further features and advantages of the coffee-maker and of the related method of manufacture according to the invention will become apparent from the following description of preferred embodiments, given by way of example and not of limitation, with reference to the accompanying figures, in which:
- Figure 1 shows a bottom axonometric view of a coffee-maker according to the present invention;
- Figure 2 shows a sectional view of the coffee-maker of figure 1;
- Figure 3 shows an axonometric view of the bottom plate of the boiler of the coffee-maker of figure 1;
- Figure 4 shows a sectional view of the bottom plate of figure 3;
- Figure 5 shows a sectional view of the boiler of the coffee-maker of figure 1, before the application of the bottom plate of figure 3;
- Figure 6 shows an enlarged sectional view of the boiler of figure 1.

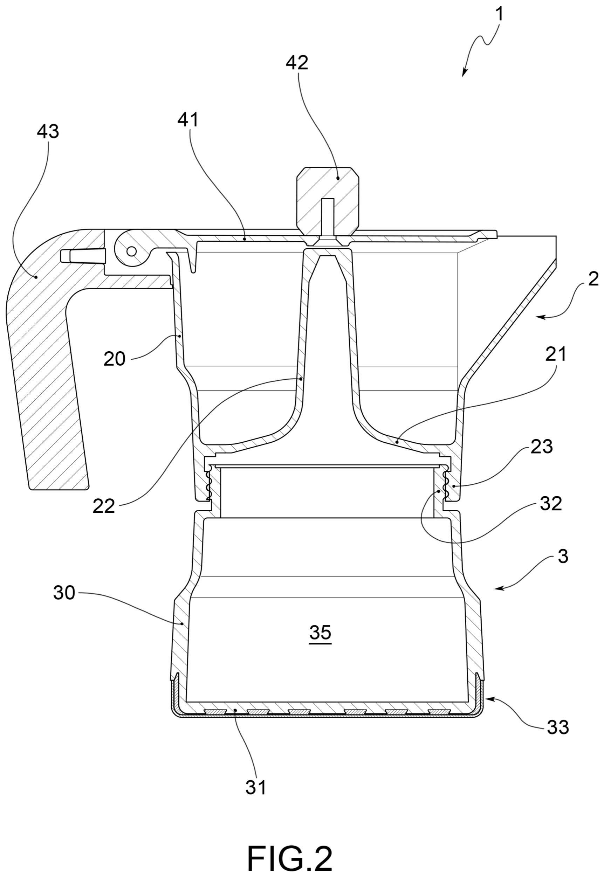

In the following discussion, the expressions "upper" and "lower" or "top" and "bottom" or also "above" and "below" or the like, refer to the coffee-maker 1 in its normal resting orientation, as shown for example in figure 2. The normal resting orientation is the one that allows the coffee-maker 1 to be stably placed on a burner in order to prepare the coffee beverage.

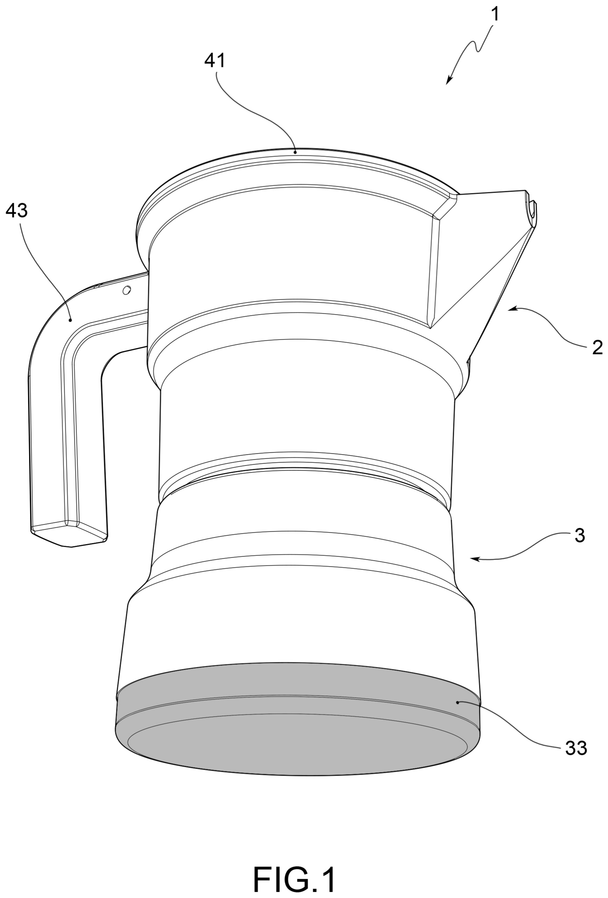

With particular reference to figure 1, the reference number 1 denotes, as a whole, a coffee-maker according to the present invention. The coffee-maker 1 comprises an upper part called collector 2 and a lower part called boiler 3, removably coupled.

The coffee-maker 1 according to the present invention comprises a boiler 3 and a collector 2 made of pure or nearly pure aluminium (i.e., with a purity greater than 99.5%) or of aluminium alloy.

The coffee-maker 1, in order to function correctly and in a safe and comfortable manner for the user, also comprises other elements. Some of these are visible in figure 2: a lid 41 with a knob 42; a handle 43. Others are not shown: a safety valve; a funnel with filter; a disc filter; a gasket. These elements, which are entirely known, are irrelevant for the purposes of the present invention and will therefore not be described in detail.

The collector 2 comprises side walls 20 and a bottom 21 from which a small column 22 extends upwards and coupling means 23 extend downwards. The collector 2 houses, just below the bottom 21, a disc filter and a gasket (not shown).

The boiler 3 comprises a side wall 30 connected at the bottom to a bottom 31 and at the top to coupling means 32.

The coupling means 32 of the boiler are complementary to the coupling means 23 of the collector 2. For example, the coupling means are a threaded band. Alternatively, the coupling means may comprise a bayonet fitting, a lever lock or the like.

The boiler 3 defines inside it a chamber 35 adapted to accommodate the amount of water necessary for the preparation of coffee; furthermore, a funnel with filter (not shown) is placed inside chamber 35.

The boiler 3 is an enbloc body: that is, the side wall 30, the bottom 31 and the coupling means 32 are made in one piece, and therefore there are no joint lines or welds.

The boiler 3 as described above may be obtained by die casting, lost-wax casting, sand casting, deep drawing, hot extrusion, cold extrusion or, preferably, by shell casting.

The boiler 3 is provided, below the bottom 31, with a bottom plate 33 comprising ferromagnetic material. The presence of the bottom plate 33 comprising ferromagnetic material allows the coffee-maker 1 to be used on induction hobs. The bottom plate 33 is rigidly coupled to the boiler 3, so as not to be able to move relative thereto.

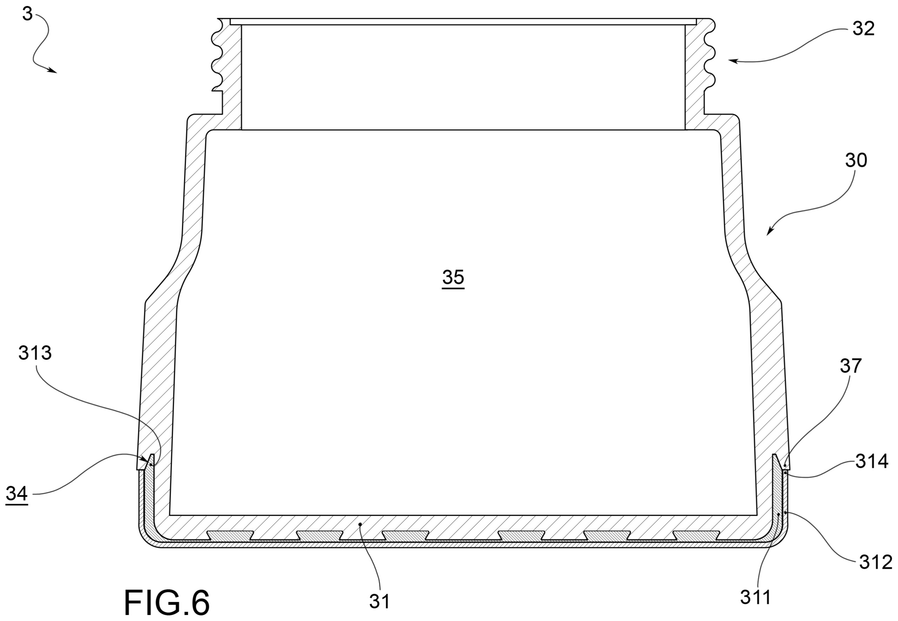

As seen in figure 6, the bottom plate 33 has a substantially bowl-shaped configuration, which surrounds and contains the bottom 31 of the boiler 3. The bottom plate 33, in fact, is formed by a discoid base 320 and an annular flank 321, which together define a seat 322 in which the bottom 31 of the boiler 3 is inserted. It is noted that the flank 321 of the bottom plate 33 rises so as to only minimally envelop the side wall 30 of the boiler 3.

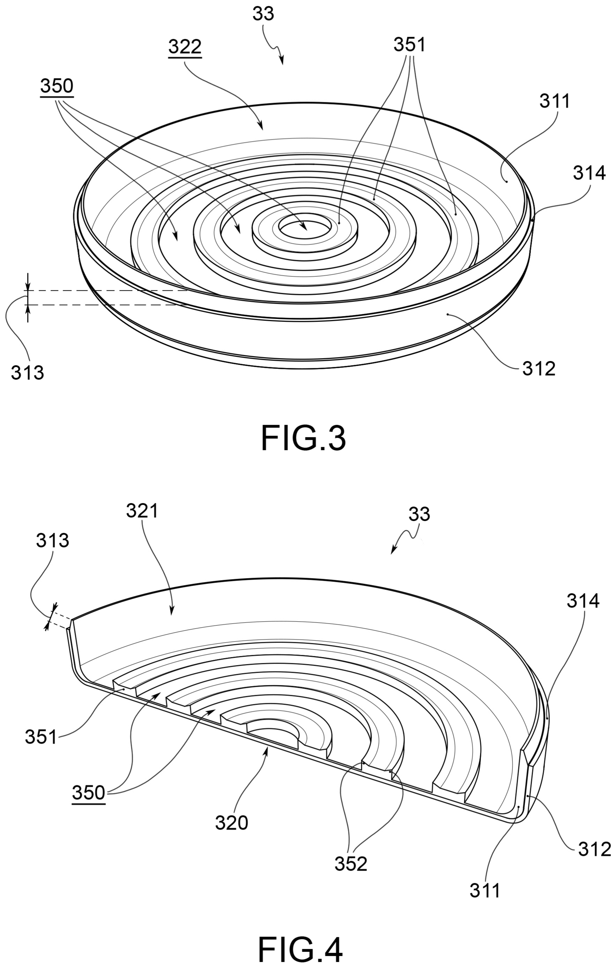

The bottom plate 33, shown in detail in figures 3 and 4, comprises an inner layer 311 and an outer layer 312. The inner layer 311 and the outer layer 312, of which the bottom plate 33 is composed, are rigidly coupled, so as not to be able to move relative to one another.

The inner layer 311 of the bottom plate 33 is made entirely of aluminium, pure or nearly pure (i.e., with a purity greater than 99.5%) or of an alloy.

The outer layer 312 of the bottom plate 33 is made of ferromagnetic material, for example of stainless steel. Preferably, the stainless steel is of the 400 series, that is, ferritic and martensitic stainless steel, for example SS430.

The outer layer 312 of the bottom plate 33 has a thickness smaller than that of the inner layer 311. The outer layer 312 has at least the minimum thickness to function on induction hobs.

As seen in figures 3 and 4, the outer layer 312 has a substantially bowl-shaped configuration, which surrounds and contains the inner layer 311. The outer layer 312 of the bottom plate 33 almost completely surrounds the inner layer 311. In particular, the outer layer 312 surrounds the inner layer 311 for a portion of its surface corresponding to the base and the side wall, with the exception of an upper edge 313. The upper edge 313 of the inner layer 311 corresponds to an annular portion at the upper end. More specifically, the outer layer 312 comprises an upper edge 314 that terminates before the upper edge 313 of the inner layer 311, as shown for example in figure 4.

It is noted, however, that as seen in figure 6, once the bottom plate 33 is fixed below the bottom 31 of the boiler 3, the outer layer 312 is superposed on the inner layer 311 over the entire outer surface. In other words, no portion of the inner layer 311 of the bottom plate 33 is exposed to the outside. This is because the upper edge 313 of the inner layer 311 of the bottom plate 33 is inserted into a special annular cavity 34 made in the lower part of the side wall 30 of the boiler 3.

The boiler 3 has, at the outer surface and in the lower part of the side wall 30, a recess 36 which extends from a lower edge 37 and continues to the bottom 31. The cavity 34 is made at the lower edge 37. Once the bottom plate 33 is fixed below the bottom 31 of the boiler 3, the upper edge 313 of the inner layer 311 of the bottom plate 33 is inserted into the cavity 34 of the boiler 3, and the upper edge 314 of the outer layer 312 is in abutment against the lower edge 37 of the boiler 3. This solution improves the coupling of the bottom plate 33 to the boiler 3.

The upper surface of the base 320 of the bottom plate 33, facing the seat 322, is provided with ridges 351, clearly visible in figures 3 and 4. The ridges 351 therefore protrude inside the seat 322.

The ridges 351 may have the most varied geometries and arrangements: circular concentric, spiral, linear parallel, linear grid, radial, aligned dots or random. In the example of figure 3, the ridges 351 are circular and concentric.

Preferably, the ridges 351 are uniformly distributed over the upper surface of the base 320 of the bottom plate 33.

Recesses 350 are defined between the ridges 351. The recesses 350 concern only the inner layer 311 of the bottom plate 33, without reaching or affecting the outer layer 312.

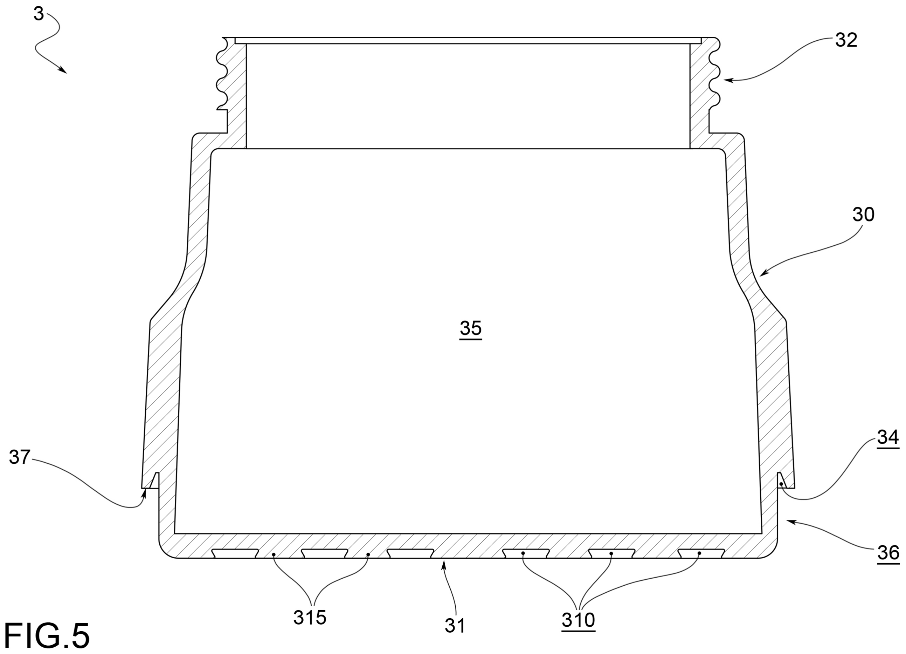

The lower surface of the bottom 31 of the boiler, opposite the chamber 35, is provided with depressions 310, clearly visible in figure 5. The depressions 310 are made in the wall that constitutes the bottom 31 of the boiler 3.

The position of the depressions 310 mirrors, in negative, the position of the ridges 351 of the bottom plate 33.

Ridges 315 are defined between the depressions 310.

Once the bottom plate 33 is fixed below the bottom 31 of the boiler 3, the ridges 351 of the bottom plate 33 are inserted into the depressions 310 of the bottom 31. This solution improves the coupling of the bottom plate 33 to the boiler 3.

To further improve the coupling of the bottom plate 33 to the boiler 3, the geometry of the ridges 351 of the bottom plate 33 does not exactly match the geometry of the depressions 310 of the bottom 31. The width of the ridge 351 is substantially the same as the entrance of the depression 310 of the bottom 31 to allow the insertion of the ridge 351 into the depression 310. As seen in figure 4, the ridge 351 is provided, at the upper surface, with two lateral teeth 352. The height of the ridge 351 at the lateral teeth 352 is slightly greater than the depth of the depression 310 of the bottom 31. The depression 310 has the shape of an inverted isosceles trapezoid: in this way, since the height of the ridge 351 is slightly greater than the depth of the depression 310, the lateral teeth 352 of the ridge 351 deform and have room to accommodate themselves to completely fill the depression 310. This solution improves the coupling of the bottom plate 33 to the boiler 3.

The bottom plate 33 is therefore secured to the bottom 31 of the boiler 3 by means of adhesion anchoring (the resisting force being generated in the inner layer 311 made of the same material as the bottom 31, namely aluminium) and shape anchoring (the resisting force being generated by the geometrical interlocking between the ridges 351 of the bottom plate 33 and the depressions 310 of the bottom 31).

The method of manufacture of the boiler 3 according to the present invention will now be described.

The method of manufacture of the boiler 3 comprises the following steps:
- making a boiler 3 with a side wall 30 connected at the bottom to a bottom 31 and at the top to coupling means 32, said boiler 3 being an enbloc body made of aluminium;
- making a bottom plate 33 with a base 320 and a flank 321 defining a seat 322, said bottom plate 33 being formed by an inner layer 311 of aluminium and an outer layer 312 of ferromagnetic material rigidly coupled;
- making, on the inner layer 311 of the bottom plate 33, a plurality of ridges 351 projecting into the seat 322;
- making, on an outer surface of the bottom 31 of the boiler 3, a plurality of depressions 310;
- housing the bottom 31 of the boiler 3 in the seat 322 of the bottom plate 33 so that the ridges 351 are inserted into the depressions 310;
- rigidly coupling the bottom plate 33 to the boiler 3 by means of pressing;
- performing a spin-forming operation of the bottom plate 33 over the entire surface of the outer layer 312.

The step of making a boiler 3 as an enbloc body made of aluminium provides for the use of pure or nearly pure aluminium.

The step of making a bottom plate 33 formed by an inner layer 311 and an outer layer 312 rigidly coupled provides for:
- forming the outer layer 312 with a base 320 and a flank 321 defining a seat 322; casting the inner layer 311 into the seat 322 preferably using pure or nearly pure aluminium; or
- starting from a bimetal sheet with an inner layer 311 of aluminium, pure or alloyed, and an outer layer 312 of ferromagnetic material, preferably stainless steel, forming a base 320 and a flank 321 defining a seat 322.

The step of making a plurality of ridges 351 on the bottom plate 33 is preferably carried out by mechanical machining, for example turning.

The step of making a plurality of depressions 310 in the boiler 3 is preferably carried out by moulding.

The step of rigidly coupling the bottom plate 33 to the boiler 3 is preferably carried out using a high-tonnage press. In this step, the material of the ridges 351 deforms and flows to fill the depressions 310.

The step of performing a spin-forming operation of the bottom plate 33 provides for reaching up to and including the lower edge 37 of the boiler 3. In this step, the material of the ridges 351 further deforms and flows to completely fill the depressions 310. Preferably, the spin-forming operation reaches, axially, up to the upper edge 313 of the inner layer 311 to smooth the outer surface of the boiler 3.

The presence of both the pressing and the spin-forming operations of the bottom plate 33 allows each ridge 351 to completely and uniformly fill the corresponding depression 310, improving the rigid coupling of the bottom plate 33 to the boiler 3.

Innovatively, a coffee-maker, and in particular a boiler for a coffee-maker, according to the present invention is suitable for use on induction hobs of any type and allows the flavor obtained with traditional preparation in an aluminium container to be preserved unaltered.

Advantageously, in the boiler for a coffee-maker according to the present invention, the bottom plate, comprising ferromagnetic material, is firmly secured to the bottom of the boiler by means of adhesion and shape anchoring.

It is clear that a person skilled in the art could make modifications to the coffee-maker and to the boiler described above, all of which fall within the scope of protection as defined by the following claims.

## Claims

1. A boiler (3) for an induction coffee-maker, comprising a single body of aluminum having a side wall (30) connected at an end to a bottom (31) and at a top to coupling means (32) for a coffee collector, said single body defining a chamber (35);
said boiler (3) having a bottom plate (33) rigidly coupled below the bottom (31), said bottom plate (33) being formed by an inner layer (311) of aluminum and an outer layer (312) of ferromagnetic material;
**characterized in that** said bottom plate (33) has a discoid base (320) and an annular flank (321) mutually defining a seat (322) into which the bottom (31) of the boiler (3) is inserted,
and **in that** the bottom plate (33) is secured to the bottom (31) of the boiler (3) by means of an adhesion and shape anchoring.

2. Boiler (3) for a coffee-maker according to claim 1, wherein the surface of the base (320) of the bottom plate (33) facing the seat (322) is provided with ridges (351), said ridges (351) being inserted into depressions (310) made on the surface of the bottom (31) of the boiler (3) opposite the chamber (35).

3. Boiler (3) for a coffee-maker according to claim 2, wherein said ridges (351) are circular and concentric and said depressions (310) have an inverted isosceles trapezoid shape.

4. Boiler (3) for a coffee-maker according to any one of the preceding claims, wherein said flank (321) of the bottom plate (33) rises up to envelop a part of the side wall (30) of the boiler (3).

5. Boiler (3) for a coffee-maker according to claim 4, wherein said flank (321) of the bottom plate (33) extends to only minimally envelop the side wall (30) of the boiler (3).

6. Boiler (3) for a coffee-maker according to any one of the preceding claims, wherein said outer layer (312) of the bottom plate (33) is of stainless steel, preferably SS430 steel.

7. Boiler (3) for a coffee maker according to any one of the preceding claims, wherein said outer layer (312) of the bottom plate (33) comprises an upper edge (314) terminating before an upper edge (313) of the inner layer (311) of the bottom plate (33), and wherein said upper edge (313) of the inner layer (311) of the bottom plate (33) is inserted into an annular cavity (34) made in a lower part of the side wall (30) of the boiler (3).

8. Boiler (3) for a coffee-maker according to any one of the preceding claims, wherein a recess (36) is made in the lower part of the side wall (30) of the boiler (3) extending from a lower edge (37) and continuing to the bottom (31), and wherein said upper edge (314) of the outer layer (312) of the bottom plate (33) is in abutment against said lower edge (37) of the boiler (3).

9. A coffee-maker (1) comprising:
- a boiler (3) according to any one of the preceding claims;
- a collector (2) comprising side walls (20) and a bottom (21) from which a small column (22) extends upwards and coupling means extend downwards (23) for coupling with the boiler (3).

10. A method of manufacturing a boiler (3) for a coffee-maker, said method comprising:
- making a boiler (3) having a side wall (30) connected at an end to a bottom (31) and at a top to coupling means (32), said boiler (3) being a single body of aluminum;
- making a bottom plate (33) with a base (320) and a flank (321) defining a seat (322), said bottom plate (33) being formed by an inner layer (311) of aluminum and an outer layer (312) of ferromagnetic material, which are rigidly coupled;
- making, on the inner layer (311) of the bottom plate (33), a plurality of ridges (351) projecting into the seat (322);
- making, on an outer surface of the bottom (31) of the boiler (3), a plurality of depressions (310);
- housing the bottom (31) of the boiler (3) in the seat (322) of the bottom plate (33) so that the ridges (351) are inserted into the depressions (310);
- rigidly coupling the bottom plate (33) to the boiler (3) by means of pressing;
- performing a spin-forming operation of the bottom plate (33) on the entire surface of the outer layer (312).
